Europäisches Patentamt

**European Patent Office**

Office européen des brevets

(11) Numéro de publication: **0 041 894 B1**

(12) **FASCICULE DE BREVET EUROPEEN**

(45) Date de publication du fascicule du brevet:
15.02.84

(21) Numéro de dépôt: **81400895.9**

(22) Date de dépôt: **05.06.81**

(51) Int. Cl.³: **A 23 K 1/18, A 23 K 3/00,
A 23 K 1/00, A 23 L 3/34**

(54) **Aliment à humidité intermédiaire, notamment pour animaux, ainsi que le procédé et l'agent pour le préparer.**

(30) Priorité: **06.06.80 FR 8012673**

(43) Date de publication de la demande:
**16.12.81 Bulletin 81/50**

(45) Mention de la délivrance du brevet:
**15.02.84 Bulletin 84/7**

(84) Etats contractants désignés:
**AT BE DE GB IT NL SE**

(56) Documents cités:
**CA - A - 1 082 516
FR - A - 2 226 935
FR - A - 2 402 419
GB - A - 1 043 585
US - A - 2 176 027
US - A - 2 515 157**

**CHEMICAL ABSTRACTS, vol. 81, no. 3, 22 juillet 1974,
page 227, ref. 12097x, Columbus, Ohio, USA**

(73) Titulaire: **Roquette Frères, F-62136 Lestrem (FR)**

(72) Inventeur: **Devos, Francis, Route de Merville Morbecque,
F-59660 Merville (FR)**
Inventeur: **Dumont, Monique, Route de Merville La Motte
aux Bois, par Morbecque F-59190 Hazebrouck (FR)**
Inventeur: **Degrave, Marie-Hélène, rue du Mont des Cats
Godewaersvelde, F-59270 Bailleul (FR)**
Inventeur: **Huchette, Michel, 63, rue du Maréchal Joffre,
F-59660 Merville (FR)**

(74) Mandataire: **Koch, Gustave et al, Cabinet
PLASSERAUD 84, rue d'Amsterdam, F-75009 Paris (FR)**

### Aliment à humidité intermédiaire, notamment pour animaux, ainsi que le procédé et l'agent pour le préparer

L'invention a pour objet un aliment à humidité intermédiaire, notamment pour animaux, c'est-à-dire un aliment du genre de ceux qui présentent une humidité comprise entre 15 et 50%, plus généralement comprise entre 18 et 40% en poids, qui leur confère une structure souple, leur conservation ne nécessitant, par ailleurs, ni traitement thermique ni réfrigération.

La bonne conservation de ces aliments est obtenue grâce à la réduction, par action sur les solutés, de l'activité de l'eau entrant dans leur constitution.

Ainsi, la technologie des aliments à humidité intermédiaire consiste à en ajuster la formulation pour obtenir des produits bien définis, tant d'un point de vue nutritionnel (ajustement de la valeur nutritive, apports caloriques et vitaminiques) que d'un point de vue organoleptique (goût et couleur, texture) et physico-chimique, en agissant sur l'activité de l'eau et sur l'optimisation des autres paramètres pour rechercher les effets inhibiteurs maximaux.

Elle vise également le procédé et l'agent pour préparer le susdit aliment.

Les aliments à humidité intermédiaire les plus connus sont ceux destinés aux animaux domestiques, comme le chien et le chat; ils contiennent généralement de 30 à 35% de viande, de 20 à 30% de saccharose, de 10 à 20% de céréales et de protéines végétales, des agents minéraux, des vitamines, ainsi que des agents humectants, des agents antimycotiques et, éventuellement, des agents antioxydants.

L'agent humectant habituellement utilisé est le propylèneglycol; ce produit, qui joue également le rôle d'antiseptique, est mis en œuvre à des taux d'environ 4 à 6% en poids, l'humidité de ces aliments se situant à l'intérieur du domaine indiqué plus haut et plus préférentiellement vers environ 20 à 35% en poids.

Parmi les agents antifongiques habituellement utilisés, on peut citer le propionate de calcium et le sorbate de potassium, qui sont mis en œuvre à des taux d'environ 0,1 à 0,4% en poids.

Parmi les agents antioxydants habituellement utilisés, on peut citer par exemple le BHA, le BHT, la tributylhydroquinone et la vitamine E.

Pour illustrer cet art antérieur, on indique ci-après la composition d'un aliment à humidité intermédiaire imitant une viande persillée et destiné aux chiens (Article de Potter paru dans «Food Product Development» 4, N° 7 pp. 38-48, éd. 1970).

*(Tableau en tête de la colonne suivante)*

Les aliments à humidité intermédiaire connus sont satisfaisants du point de vue de la stabilité bactériologique, de la valeur nutritionnelle et de l'aspect du produit, mais présentent des inconvénients graves du point de vue du goût, du prix de revient et de l'appétence.

| Nature des ingrédients | Proportion (% en poids) |
|---|---|
| Sous-produit de bœuf | 32,3750 |
| Sucre | 26,5584 |
| Caséinate de sodium | 15,0000 |
| Parures de bœuf | 10,1250 |
| Amidon de maïs | 7,5000 |
| Propylèneglycol | 4,5000 |
| Phosphate dicalcique (déshydraté) | 2,5000 |
| Sel iodé | 1,2000 |
| Sorbate de potassium | 0,1000 |
| Vitamine E | 0,0503 |
| Oxyde de titane | 0,0500 |
| Riboflavine (8 mg/kg) | 0,0202 |
| Vitamine A (60 000 IU/kg) | 0,0503 |
| Levure séchée irradiée | 0,0030 |
| Colorant rouge | 0,0020 |
| Colorant jaune | 0,0020 |
| Mononitrate de thiamine | 0,0007 |
| Total | 100,0000 |

Ainsi, l'incorporation de 4 à 6% de propylèneglycol, en tant qu'humectant et agent de conservation, exerce un effet très néfaste du point de vue du goût de l'aliment fini, ce produit possédant un goût très amer.

De même, les agents antifongiques susmentionnés ont un goût très désagréable, même au taux habituellement employé; de plus, ils sont chers et leur efficacité se limite aux milieux acides.

Pour faciliter la conservation bactériologique de ces aliments, il est souvent nécessaire d'ajouter des acides, notamment acétique, citrique ou lactique; il se trouve que cette addition affecte de façon négative l'appétence des aliments.

Enfin, pour abaisser l'activité de l'eau (abréviation utilisée dans le métier: aw) en vue d'améliorer la conservation et pour augmenter la valeur nutritionnelle, les aliments connus comportent de fortes quantités de sucres et sont supplémentés en oligo-éléments et vitamines, ce qui grève le prix de revient.

Il a déjà été proposé — cf. le brevet français N° 74.14044 publié sous le N° 2226935 — de remplacer les stabilisateurs bactériologiques du type propylèneglycol par des polypeptides à poids moléculaire faible.

Les résultats obtenus ne sont pas entièrement satisfaisants.

L'invention a donc pour but, surtout, de remédier aux inconvénients de l'art antérieur et de proposer un aliment du genre en question répondant mieux que ceux qui existent déjà aux divers desiderata de la pratique.

Or, la titulaire a eu le mérite de trouver que, de façon inattendue et surprenante, ce but, et notamment la suppression partielle et éventuellement totale des agents humectants tels que le propylèneglycol, pouvait être atteint par l'utilisation de ce qu'on désigne par solubles de maïs, notamment sous forme d'eaux de trempage du maïs éventuellement concentrées, dans la préparation des aliments semi-humides, notamment destinés à l'alimentation animale, les aliments semi-humides ainsi obtenus présentant une excellente stabilité bactériologique, une excellente appétence, une valeur nutritionnelle accrue ainsi que des propriétés texturales améliorées.

La titulaire a également trouvé que l'utilisation des solubles de maïs sous forme d'eaux de trempage éventuellement concentrées permettait de présenter, sous forme d'aliments à humidité intermédiaire, des aliments pour animaux qui ne contiennent pas nécessairement la viande et les autres constituants des aliments à humidité intermédiaire connus et qui, jusqu'à ce jour, étaient présentés sous forme de produits secs à quelques pour-cents en humidité résiduelle, la fabrication de ces aliments présentant l'inconvénient de nécessiter une dépense d'énergie importante pour le séchage. Parmi ces aliments, on citera notamment certains aliments pour ruminants et porcs et, en particulier, ceux à base de produits cellulosiques, notamment de drèches de maïs ou de pulpe de pomme de terre et de solubles de maïs.

Il s'ensuit que l'aliment à humidité intermédiaire conforme à l'invention est caractérisé par le fait qu'il comporte, à titre d'agent humectant et de conservation, une proportion efficace de 0,1 à 70% en poids, de préférence de 1 à 65% en poids de solubles de maïs, notamment sous forme d'eaux de trempage du maïs éventuellement concentrées.

Le procédé conforme à l'invention est caractérisé par le fait que l'on fait entrer dans la composition d'un aliment à humidité intermédiaire, à titre d'agent humectant et de conservation, une proportion efficace de 0,1 à 70% en poids, de préférence de 1 à 65% en poids de solubles de maïs, notamment sous forme d'eaux de trempage du maïx éventuellement concentrées.

L'agent humectant et de conservation conforme à l'invention est constitué par les solubles de maïs, notamment sous forme d'eaux de trempage du maïs éventuellement concentrées, dans l'application de ces solubles à la constitution de l'aliment à humidité intermédiaire conforme à l'invention.

L'invention vise encore d'autres dispositions qui s'utilisent de préférence et dont il sera plus explicitement question ci-après.

Et elle pourra, de toute façon, être bien comprise à l'aide du complément de description qui suit et des exemples, ledit complément de description et lesdits exemples étant donnés en rapport avec des modes de réalisation avantageux de l'invention.

Se proposant, par conséquent, d'établir un aliment à humidité intermédiaire conforme à l'invention, on s'y prend comme suit ou de façon équivalente.

Cet aliment comporte, à titre d'agent humectant, de conservation et également à titre d'agent nutritif, une proportion efficace de solubles de maïs, notamment sous forme d'eaux de trempage éventuellement concentrées; la susdite proportion est généralement de 0,1 à 70% en poids, de préférence de 1 à 65% en poids, par rapport à la masse totale de l'aliment.

S'agissant d'un aliment destiné par exemple aux chiens et aux chats et qui, outre les solubles de maïs, contient de la viande, des céréales, des protéines végétales, des sucres, des vitamines et d'autres agents présents dans les aliments semi-humides du genre en question déjà connus, l'expression proportion efficace désigne la proportion de solubles de maïs par rapport à la masse totale de l'aliment qui confère audit aliment une stabilité bactériologique suffisante en cas de suppression partielle voire totale du propylèneglycol.

Dans la pratique, cette proportion efficace correspond à 0,1-40% en poids, de préférence 1 à 30% en poids et, plus préférentiellement encore, de 3 à 25% en poids par rapport à la masse de l'aliment complet.

S'agissant des aliments à humidité intermédiaire qui ne comportent pas nécessairement de la viande, c'est-à-dire notamment des aliments pour ruminants et porcs qui remplacent les aliments présentés jusqu'à ce jour sous la forme d'aliments secs, l'expression proportion efficace désigne la proportion de solubles de maïs, sous forme d'eaux de trempage éventuellement concentrées, qui apporte à ces aliments une quantité de substances sèches constitutives des solubles de maïs équivalente à celle comportée par les aliments secs connus.

Dans la pratique, cette proportion est de 25 à 65% en poids par rapport à la masse totale de l'aliment.

Toujours du point de vue pratique, il est précisé que les solubles de maïs incorporés, conformément à l'invention, aux aliments à humidité intermédiaire, sont mis en œuvre sous forme de sirops plus ou moins concentrés obtenus à partir des eaux de trempage du maïs qui, dans le métier, sont désignées par l'expression «Corn-Steep Liquor» ou C.S.L. et qui peuvent d'ailleurs être utilisées telles quelles sans aucune concentration. Généralement, toutefois, on les met en œuvre après une concentration de 45 à 55%, de préférence voisine de 50% de matières sèches. Avantageusement, cette concentration peut être de 70 à 75% de matières sèches, la mise en œuvre sous forme de poudre déshydratée étant également possible.

On rappelle à ce propos que les solubles de maïs sont obtenus lors de la première étape du travail du maïs en amidonnerie humide, au cours de laquelle les grains de maïs sont trempés à contre-courant dans une eau sulfitée chaude et durant un temps déterminé qui est généralement de l'ordre de 35 à 50 h. Deux phénomènes essentiels se produisent lors de cette trempe.

Le premier de ces phénomènes consiste en une diffusion des matières solubles du grain de maïs vers l'eau de trempe, le second consistant en une fermentation de ces matières solubles dans l'eau de trempe.

Les solubles de maïs sont donc le produit résultant d'une diffusion et d'une fermentation simultanées des matières solubles présentes à l'origine dans le grain, et en particulier dans le germe de maïs. Les eaux de trempage qui les renferment ont une couleur jaune clair et une odeur caractéristique très agréable; après déshydratation du C.S.L., les solubles se présentent sous la forme d'une poudre jaune.

Ces solubles de maïs renferment 45 à 50% de protéines et d'acides aminés libres (le rapport azote aminé/azote total est voisin de 0,35), 22% d'acide lactique, 20% de minéraux (essentiellement sous forme d'inositophosphate de calcium et de magnésium) et présentent, en l'absence de traitement préalable, un pH voisin de 4,0.

La composition en acides aminés des solubles de maïs, donnée dans le tableau I, montre qu'ils constituent une excellente source nutritionnelle, dont la valeur est encore renforcée par la présence d'oligo-éléments (environ 300 ppm de fer, 10 ppm de cuivre, 40 ppm de manganèse et 100 ppm de zinc). Les solubles de maïs sont d'autre part très riches en vitamines, comme l'indique le tableau II (composition vitaminique en mg/100 g de matières sèches d'eau de trempage du maïs) et particulièrement en vitamines du groupe B: riboflavine, acide pantothénique, pyridoxine et amide nicotinique notamment. Ils contiennent, de plus, des facteurs de croissance non identifiés, notamment pour l'alimentation des volailles et des bovins.

### Tableau I
(Composition en acides aminés)

| Nature de l'acide aminé | Proportion (g) |
|---|---|
| Acide aspartique | 5,57 |
| Thréonine | 3,79 |
| Sérine | 4,48 |
| Acide glutamique | 17,26 |
| Proline | 9,09 |
| Glycine | 5,06 |
| Alanine | 9,48 |
| Valine | 4,95 |
| Cystine | 1,66 |
| Méthionine | 1,63 |
| Isoleucine | 3,15 |
| Leucine | 7,9 |
| Tyrosine | 3,00 |
| Phényl-alanine | 3,50 |
| Lysine | 4,45 |
| Histidine | 3,40 |
| Arginine | 4,60 |
| $NH_3$ | 6,38 |

*(Tableau en tête de la colonne suivante)*

La mise en œuvre des solubles de maïs dans les aliments conformes à l'invention entraîne des avantages déterminants du point de vue de la stabilité bactériologique de ces aliments qui, lorsqu'ils contiennent environ 20% en poids de solu-

### Tableau II
(Teneur en vitamines du groupe B d'après H. Aurich de l'Institut physiologique et chimique de Leipzig)

| Désignation de la vitamine | Proportion (mg/100 g m.s.) |
|---|---|
| Thiamine (vitamine B1) | 2,97 |
| Riboflavine (vitamine B2) | 0,616 |
| Acide pantothénique (vitamine FF) | 10,56 |
| Amide nicotinique (vitamine PP) | 11,264 |
| Acide p-aminobenzoïque | 0,132 |
| Pyridoxine (vitamine B6) | 1,408 |
| m-Inositol (vitamine B7) | 352,00 |
| Biotine (vitamine B8) | 0,066 |
| Choline (facteur lipotrope) | 202,4 |
| Cyanocobalamine (vitamine B12) | 0,01408 |
| Acide folique (vitamine B9) | 0,009 |

bles de maïs sous la forme d'un sirop à 50% de matières sèches, peuvent contenir de 25 à 35% d'eau sans qu'apparaisse aucune prolifération bactérienne ou mycotique après 60 d de stockage à température ambiante, et cela sans la présence dans ces aliments des agents humectants et des agents antimycotiques usuels.

La présence des solubles de maïs conduit donc à une excellente stabilité bactériologique des aliments, permettant de diminuer ou même d'éliminer complètement les agents humectants et les agents de conservation obligatoirement utilisés dans les aliments de l'art antérieur. En ce qui concerne l'aspect humectant, par exemple, à titre illustratif, on signale qu'une comparaison effectuée entre, d'une part, un aliment à 30% d'humidité, contenant 20% de solubles de maïs à 50% de m.s. et ne contenant aucun agent humectant ou stabilisant et, d'autre part, un aliment témoin à 30% d'humidité contenant 5% de propylèneglycol et 0,2% de sorbate de potassium, montre qu'au bout de 10 d dans une atmosphère assez sèche (45% d'humidité relative) à une température de 35° C, l'aliment témoin avait perdu 15% de son humidité alors que l'aliment selon l'invention n'en avait perdu que 10%.

De plus, l'incorporation de solubles de maïs dans un aliment semi-humide accroît la valeur nutritionnelle de cet aliment et permet de remplacer une partie des protéines et des vitamines présentes dans les aliments de l'art antérieur.

La neutralisation par un alcali, préalablement à leur mise en œuvre, des solubles de maïs se traduit favorablement sur le plan de leur efficacité en tant qu'agents humectants.

Cette neutralisation est effectuée avantageusement jusqu'à un pH d'environ 5,6 à 6.

Avantageusement on utilise la soude ou l'ammoniaque; les aliments comportant des solubles neutralisés à la soude sont plus particulièrement destinés aux animaux domestiques tels que chiens et chats; ceux qui comportent des solubles de maïs neutralisés à l'ammoniaque sont plus appropriés pour les ruminants, de par leur apport d'azote.

On a constaté, par ailleurs, que les aliments semi-humides conformes à l'invention se distinguent par une très bonne extrudabilité et présentent des propriétés texturales améliorées.

La présence d'acides aminés libres dans les solubles de maïs exerce un effet bénéfique sur l'appétence des aliments, et la forte proportion d'acide lactique comportée par les solubles permet, de par son effet sur le pH, de diminuer voire de supprimer l'addition d'acides tels que les acides phosphorique, acétique ou citrique habituellement utilisés.

Il est avantageux d'amener les solubles de maïs, préalablement à leur mise en œuvre, à une concentration en matières sèches de 70 à 75% en poids.

En effet, les solubles de maïs, ainsi concentrés, apportent moins d'humidité, ce qui permet d'augmenter la proportion de viande — dont la teneur en eau est élevée et atteint environ 70 à 80% en poids — dans l'aliment fini.

Pour réaliser cette concentration, il convient d'éliminer des solubles de maïs les phytates ou autres matières insolubles, qui empêchent toute concentration à une matière sèche supérieure à 50%. Pour ce faire, on peut neutraliser les eaux de trempage (environ 25% en poids de matières sèches) jusqu'à un pH voisin de 7 grâce à l'addition d'alcali, notamment de soude, pour précipiter des phytates qui peuvent alors être éliminés très simplement par filtration, le pH étant ensuite ramené aux environs de 5 par l'addition d'acide, notamment chlorhydrique ou lactique, ce qui présente l'avantage d'amener la formation de lactate, de sodium par exemple, qui renforce encore le pouvoir humectant et bactériostatique des solubles de maïs ainsi traités.

On peut également envisager de traiter, à ce stade, les solubles de maïs à l'aide de charbon actif afin de les désamériser.

Les solubles de maïs débarrassés des phytates peuvent être concentrés sans difficulté à 70-75% de matières sèches et présentent un pouvoir humectant et une action sur l'activité de l'eau améliorée, en raison de l'alimentation des matières insolubles initialement présentes et en raison également de l'accroissement de leur teneur en chlorure de sodium ou en lactate de soude.

Les solubles de maïs, tels qu'issus de la trempe du maïs et concentrés à 50% de matières sèches, neutralisés partiellement ou non, ou concentrés à 70% de matières sèches après le prétraitement ci-dessus défini, ou encore présentés sous forme de poudre déshydratée, sont mis en œuvre, conformément à l'invention, dans les proportions indiquées plus haut.

Mis à part l'incorporation conforme à l'invention des solubles de maïs au cours d'une des étapes de la fabrication des aliments à humidité intermédiaire du genre en question, cette fabrication peut être réalisée d'une manière en soi connue, par exemple celle apparaissant dans le brevet U.S. N° 3202514.

L'invention pourra de toute façon être bien comprise à l'aide des exemples qui suivent et qui sont relatifs à des modes de réalisation avantageux.

*Exemple 1:*

Un aliment semi-humide pour chiens a été préparé selon la formule suivante:

| | |
|---|---|
| Déchets de viande (porc et bœuf) | 2500 g |
| Protéine de pomme de terre | 1300 g |
| Farine de blé | 1300 g |
| Dextrose monohydrate | 2600 g |
| Solubles de maïs à 50% m.s. | 2000 g |
| Huile de maïs | 200 g |
| Chlorure de sodium | 100 g |
| Carmin de cochenille | 1 g |

Les déchets de viande, à environ 80% d'humidité, ont été préalablement hachés dans un hachoir du type Hobart, puis ont été soumis, en autoclave, à une température de 110° C pendant 10 min. Après refroidissement, la viande ainsi traitée a été mélangée avec les autres ingrédients dans un mélangeur Hobart, les ingrédients étant ajoutés sans ordre préférentiel et le mélange étant poursuivi durant 15 min.

Le produit obtenu se présente sous la forme d'une poudre très homogène et non collante. Cette poudre a ensuite été extrudée sous forme de granules réguliers, de dimensions voisines de 5 mm sur 12 mm, qui présentent une excellente texture, ne sont pas collants, ne se désagrègent pas et ne présentent aucune altération physique au stockage.

Cet aliment présente une humidité de 32% environ, un pH de 4,9, une teneur en protéines de 25% due à la bonne qualité de la viande utilisée ainsi qu'à la présence des protéines de pomme de terre.

Une analyse bactériologique, effectuée sur l'aliment fini après trois mois de stockage dans un récipient fermé maintenu à température ambiante, donne les résultats suivants:

| | |
|---|---|
| Germes aérobies (dilution 1/100) | 0 |
| Moisissures et levures (dilution 1/100) | 0 |
| Clostridiums sulfitoréducteurs (dilution 1/100) | 0 |

La stabilité bactériologique de l'aliment ainsi préparé est donc excellente, malgré l'absence totale des agents humectants et antimycotiques habituellement utilisés et malgré l'humidité assez élevée de cet aliment.

Cet aliment, placé durant 10 d dans une atmosphère sèche à 45% d'humidité relative et à 35° C, ne perd que 10% de son humidité initiale.

Il présente, d'autre part, une excellente valeur nutritionnelle, due à la présence dans les solubles de maïs d'une très forte proportion de peptides et d'acides aminés directement assimilables, ainsi qu'à la présence d'oligo-éléments et de vitamines.

L'aliment ainsi préparé est consommé très facilement par les chiens, ce qui prouve son excellente appétence.

*Exemple 2:*

Une comparaison a été établie entre un aliment témoin trouvé dans le commerce et un aliment expérimental préparé suivant une formule très voisine, mais comportant, conformément à l'invention, 20% en poids de solubles de maïs.

Les formules de l'aliment témoin T et de l'aliment expérimental E sont indiquées dans le tableau suivant (les pourcentages étant exprimés en poids).

*Tableau III*

| Constituant | Proportion (% en poids) | |
|---|---|---|
| | Aliment T | Aliment E |
| Abats de viande | 24 | 24 |
| Farine de blé | 20 | 20 |
| Farine de soja | 25,5 | 12,5 |
| Amidon de maïs | 12 | 12 |
| Saccharose | 8,5 | 0 |
| Dextrose monohydrate | 0 | 8,5 |
| Propylèneglycol | 6 | 0 |
| Sorbitol | 0 | 2 |
| Minéraux et autres ingrédients | 3 | 0 |
| NaCl | 1 | 1 |
| Solubles de maïs à 50% m.s. | 0 | 20 |

L'aliment expérimental a été préparé suivant le processus de l'exemple 1.

Les 20% de solubles de maïs sont incorporés en lieu et place de 13% de farine de soja, de 6% de propylèneglycol et de 3% de minéraux et autres agents constitutifs comme des acides, vitamines, agents mycotiques.

2% de sorbitol ont été incorporés dans l'aliment expérimental, non seulement en raison de son pouvoir humectant mais également en raison de son remarquable effet cholagogue chez le chien.

Des analyses effectuées sur ces deux aliments ont donné les résultats suivants:

| | Aliment T | Aliment E |
|---|---|---|
| Humidité | 29% | 30% |
| Perte d'humidité à 35°C, RH 40 après 10 d | 15% | 14% |
| Protéines (N × 6,25) | 21% | 22% |
| pH | 4,70 | 4,8 |

Une analyse bactériologique effectuée sur les deux aliments stockés deux mois à température ambiante a donné les résultats suivants:

| | Aliment T | Aliment E |
|---|---|---|
| Germes aérobies (1/100) | 34 | 40 |
| Levures et moisissures (1/100) | 0 | 0 |
| Clostridiums sulfito-réducteurs (1/100) | 2 | 2 |

Cet essai comparatif faisant ressortir des valeurs équivalentes montre tout l'intérêt de l'incorporation des solubles de maïs à la place du propylèneglycol, des minéraux et autres agents constitutifs dont les inconvénients sont bien connus, ainsi que de la farine de soja.

*Exemple 3:*

L'aliment semi-humide pour chiens de la composition indiquée ci-après a été préparé suivant le processus de l'exemple 1:

| | |
|---|---|
| Déchets de viande | 2500 g |
| Farine de blé | 1300 g |
| Protéine de pomme de terre | 1300 g |
| Dextrose monohydrate | 2600 g |
| Solubles de maïs à 50% de m.s. neutralisés à pH 5,6 par la soude | 2000 g |
| Huile de maïs | 200 g |
| Chlorure de sodium | 100 g |
| Carmin de cochenille | 1 g |

Les solubles de maïs incorporés dans cet aliment avaient subi un traitement de neutralisation préalable à l'aide de la soude jusqu'à un pH de 5,6.

Du fait de cette neutralisation préalable, une partie de l'acide lactique présent dans les solubles de maïs a été transformée en lactate de soude.

Ce produit se prête bien à l'extrusion.

L'aliment extrudé présente un pH de 6,30 et les analyses ont donné les résultats suivants:

| | |
|---|---|
| Protéines (N × 6,25) | 26% en poids |
| Humidité | 29% en poids |
| Perte d'humidité après un stockage de 10 d à 35°C et sous une humidité relative de 40% | 10% en poids |

Par ailleurs, une analyse bactériologique effectuée après quatre mois de stockage en récipient fermé et à température ambiante montre que, malgré le pH élevé de l'aliment, la stabilité bactériologique reste excellente:

| | |
|---|---|
| Germes aérobies (dilution 1/100) | 36 |
| Moisissures et levures | 0 |
| Clostridiums sulfitoréducteurs | 0 |

Cet aliment présente une odeur caractéristique très agréable et il est très bien accepté par les chiens.

*Exemple 4:*

Un aliment semi-humide comportant une très haute teneur en viande a été préparé selon la formule suivante et d'après le processus de l'exemple 1:

| | |
|---|---|
| Viande | 3800 g |
| Dextrose monohydrate | 2500 g |
| Farine de blé | 1650 g |
| Protéine de pomme de terre | 600 g |
| Solubles de maïs à 70% m.s. | 1300 g |
| Huile de maïs | 150 g |
| Carmin de cochenille | 1 g |

Pour pouvoir être concentrés à 70% de matières sèches, une solution de solubles de maïs à 25% de matières sèches a été amenée au préalable de pH 3,9 à pH 7,0 par addition de soude technique, ce qui a eu pour effet de faire précipiter les phytates qui sont éliminés par un passage sur terres de filtration, après addition d'une très faible quantité d'agent floculant.

Le filtrat ainsi débarrassé des phytates a ensuite été ajusté à un pH de 5,0 par l'addition d'acide chlorhydrique technique, puis les solubles de maïs ainsi traités ont été évaporés jusqu'à une concentration de 70% de matières sèches.

L'extrusion de ce produit est facile.

Son analyse a permis de réunir les résultats suivants:

| | |
|---|---|
| pH | 5,6 |
| Teneur en protéines | 26% en poids |
| Teneur en humidité | 34% en poids |

La perte d'humidité après un stockage de 10 d à 35° C et sous une humidité relative de 40% est de 9% en poids.

Une analyse bactériologique, effectuée après trois mois de stockage en récipient fermé et à température ambiante, démontre la bonne stabilité du produit malgré un pH élevé (5,6) et un taux d'humidité important (34%); en effet, on note la présence de:

| | |
|---|---|
| Germes aérobies | 54 |
| Moisissures et levures | 2 |
| Clostridiums sulfitoréducteurs | 1 |

*Exemple 5:*

Un aliment semi-humide pour ruminants a été préparé selon la formule suivante:

| | |
|---|---|
| Drèches de maïs séchées à environ 12% d'eau | 500 g |
| Solubles de maïs à 50% m.s. | 600 g |

Le produit obtenu présente une teneur en humidité d'environ 32% et une teneur en protéines d'environ 20% en poids.

Après un stockage en sachet étanche pendant quatre mois, cet aliment s'est révélé parfaitement conservé; ses propriétés organoleptiques n'ont pas été modifiées.

Ce produit se prête bien à la pelletisation. Il présente d'autre part une excellente valeur nutritionnelle due à la présence des solubles de maïs.

L'action de ce produit sur le développement des fermentations dans le rumen a été appréciée par une technique d'incubation artificielle.

Cette dernière consiste à recréer au laboratoire les conditions de la digestion dans le rumen en mettant à incuber dans le contenu du rumen une quantité définie de l'aliment à tester. Ce contenu est prélevé sur une génisse munie d'une fistule de rumen.

Les paramètres étudiés au cours de l'incubation sont:
— la quantité de gaz dégagé
— la teneur en ammoniac
— la concentration en acides gras volatils du milieu.

L'utilisation de ce produit est très bonne au niveau du rumen. Les essais *in vitro* réalisés par la méthode décrite ci-dessus ont en effet montré que:
— la fermentation augmente d'autant plus rapidement que le pourcentage de «Corn-Steep» dans l'aliment est élevé,

— la production d'acides gras volatils est plus importante,
— l'observation la plus intéressante est le faible dégagement d'ammoniac, qui traduit une bonne utilisation de cet ammoniac au fur et à mesure qu'il se forme.

Les pellets obtenus, malgré un taux d'humidité d'environ 32%, sont très stables bactériologiquement.

*Exemple 6:*

Un autre aliment semi-humide a été préparé selon la formule suivante:

| | |
|---|---|
| Pulpes de pomme de terre séchées à environ 12% d'eau | 400 g |
| Solubles de maïs à 50% m.s. neutralisés à pH 6,0 avec de l'ammoniaque | 600 g |

Le produit ainsi obtenu présente une humidité d'environ 35% et une teneur en protéines d'environ 20% en poids.

Cet aliment, stocké dans un paquet étanche pendant six mois, est parfaitement conservé sans addition d'agents conservateurs.

Son action sur le développement des fermentations dans le rumen, appréciée par la technique décrite à l'exemple 5, est très bonne.

En effet, on constate:
— une amélioration du dégagement gazeux,
— une production d'acides gras volatils plus importante, surtout pour ce qui est de l'acide acétique et de l'acide propionique,
— une meilleure utilisation de l'azote ammoniacal.

## Revendications

1. Aliment à humidité intermédiaire, caractérisé par le fait qu'il comporte, à titre d'agent humectant et de conservation, une proportion efficace de 0,1 à 70% en poids, de préférence de 1 à 65% en poids de solubles de maïs par rapport à la masse de l'aliment complet.

2. Aliment à humidité intermédiaire selon la revendication 1, destiné aux chiens et aux chats, caractérisé par le fait qu'il comporte une proportion de solubles de maïs de 0,1 à 40%, de préférence de 3 à 25% en poids par rapport à la masse de l'aliment complet.

3. Aliment à humidité intermédiaire selon la revendication 1, destiné aux ruminants et aux porcs, caractérisé par le fait qu'il est à base de produits cellulosiques, notamment de drèches de maïs ou de pulpe de pomme de terre, et qu'il comporte une proportion de solubles de maïs de 25 à 65% en poids par rapport à la masse de l'aliment complet.

4. Procédé de préparation de l'aliment selon l'une des revendications 1 à 3, caractérisé par le fait que l'on fait entrer dans la composition dudit aliment, à titre d'agent humectant et de conservation, une proportion efficace de 0,1 à 70% en poids, de préférence de 1 à 65% en poids de solubles de maïs par rapport à la masse de l'aliment complet, notamment sous forme d'eaux de trempage.

5. Procédé selon la revendication 4, caractérisé par le fait que les solubles de maïs sont mis en œuvre sous forme d'eaux de trempage concentrées à 45-55%, de préférence à environ 50% de matières sèches.

6. Procédé selon la revendication 4, caractérisé par le fait que les solubles de maïs sont mis en œuvre sous forme d'eaux de trempage concentrées à 70-75% de matières sèches.

7. Procédé selon la revendication 4, caractérisé par le fait que les solubles de maïs sont mis en œuvre sous forme de poudre déshydratée.

8. Application des solubles de maïs, notamment sous forme d'eaux de trempage pouvant être concentrées à 50 ou 70-75% de matières sèches, dans le cadre du procédé selon les revendications 4 à 7, à la constitution de l'aliment selon l'une des revendications 1 à 3.

## Patentansprüche

1. Halbfeuchtes Nahrungsmittel, dadurch gekennzeichnet, dass es als Befeuchtungs- und Konservierungsmittel einen wirksamen Anteil von 0,1 bis 70 Gew.-%, vorzugsweise von 1 bis 65 Gew.-%, an löslichen Bestandteilen von Mais enthält, bezogen auf die Gesamtmasse des Nahrungsmittels.

2. Für Hunde und Katzen bestimmtes halbfeuchtes Nahrungsmittel nach Anspruch 1, dadurch gekennzeichnet, dass es einen Anteil von löslichen Bestandteilen von Mais von 0,1 bis 40%, vorzugsweise von 3 bis 25 Gew.-%, bezogen auf die Gesamtmasse des Nahrungsmittels, enthält.

3. Für Wiederkäuer und Schweine bestimmtes halbfeuchtes Nahrungsmittel nach Anspruch 1, dadurch gekennzeichnet, dass es auf Basis von Zelluloseprodukten aufgebaut ist, insbesondere von Maisschlempen oder Kartoffelpulpe, und dass es einen Anteil von löslichen Bestandteilen von Mais von 25 bis 65 Gew.-%, bezogen auf die Gesamtmasse des Nahrungsmittels, aufweist.

4. Verfahren zur Herstellung des Nahrungsmittels nach einem der Ansprüche 1 bis 3, dadurch gekennzeichnet, dass man in die Zusammensetzung dieses Nahrungsmittels als Befeuchtungs- und Konservierungsmittel einen wirksamen Anteil von 0,1 bis 70 Gew.-%, vorzugsweise von 1 bis 65 Gew.-%, an löslichen Bestandteilen von Mais, bezogen auf die Gesamtmasse des Nahrungsmittels, einbringt, insbesondere in Form von Quellwässern.

5. Verfahren nach Anspruch 4, dadurch gekennzeichnet, dass die löslichen Bestandteile von Mais in Form von auf 45 bis 55%, vorzugsweise auf ungefähr 50% Trockensubstanz konzentrierten Quellwässern eingesetzt werden.

6. Verfahren nach Anspruch 4, dadurch gekennzeichnet, dass die löslichen Bestandteile von Mais in Form von auf 70 bis 75% Trockensubstanz konzentrierten Quellwässern eingesetzt werden.

7. Verfahren nach Anspruch 4, dadurch gekennzeichnet, dass die löslichen Bestandteile von Mais in Form von getrocknetem Pulver eingesetzt werden.

8. Anwendung von löslichen Bestandteilen von Mais, insbesondere in Form von Quellwässern, die auf 50 oder 70 bis 75% Trockensubstanz konzentriert sein können, im Rahmen des Verfahrens nach den Ansprüchen 4 bis 7 zur Schaffung der Nahrungsmittel nach einem der Ansprüche 1 bis 3.

## Claims

1. Foodstuff with intermediate moisture content, characterised by the fact that it comprises, as a moisturizing and preserving agent, an effective proportion from 0.1 to 70% by weight, preferably from 1 to 65% by weight of corn solubles with respect to the weight of the whole foodstuff.

2. Foodstuff with intermediate moisture content according to claim 1, intended for dogs and cats, characterised by the fact that it comprises a proportion of corn solubles from 0.1 to 40%, preferably from 3 to 25% by weight with respect to the weight of the whole foodstuff.

3. Foodstuff with intermediate moisture content according to claim 1, intended for ruminants and pigs, characterised by the fact that it is based on cellulosic products, notably corn husks or potato pulp, and that it comprises a proportion of corn solubles from 25 to 65% by weight with respect to the weight of the whole foodstuff.

4. Process for the preparation of the foodstuff according to one of claims 1 to 3, characterised by the fact that into the composition of said foodstuff, as moisturizing and preserving agent, is introduced an effective proportion from 0.1 to 70% by weight, preferably from 1 to 65% by weight of corn solubles, notably in the form of corn steep liquor.

5. Process according to claim 4, characterised by the fact that the corn solubles are applied in the form of corn steep liquor concentrated to 45 to 55%, preferably to about 50% of dry matter.

6. Process according to claim 4, characterised by the fact that the corn solubles are applied in the form of corn steep liquor concentrated to 70 to 75% of dry matter.

7. Process according to claim 4, characterised by the fact that the corn solubles are applied in the form of dehydrated powder.

8. Application of the corn solubles, notably in the form of corn steep liquor concentratable to 50 or 5 to 75% of dry matter, within the scope of the process according to claims 4 to 7, for constituting the foodstuffs according to one of claims 1 to 3.